# EUROPEAN PATENT SPECIFICATION

(11) **EP 2 364 238 B1**
(45) Date of publication and mention of the grant of the patent: **13.02.2013**
(21) Application number: 09796408.4
(22) Date of filing: 17.11.2009
(51) Int. Cl.: B23K 37/00

(54) **CONTROL SYSTEM**
STEUERSYSTEM
SYSTÈME DE RÉGULATION

(30) Priority: 17.11.2008 GB 0820991
(43) Date of publication of application: 14.09.2011
(73) Proprietor: Safehouse Habitats (Scotland) Ltd., Bowbridge Works Dundee DD3 7RF (GB)
(72) Inventor: WATTERS, Philip, Graham, Falkirk FK2 0JE (GB)
(74) Representative: Newell, Campbell
(86) International application number: PCT/GB2009/002687
(87) International publication number: WO 2010/055317

(56) References cited:
- EP-A1- 1 752 842
- US-A1- 2007 052 543
- US-B1- 6 783 054

## Description

The present invention relates to a control system for use in the operation and control of a hot work enclosure, usually referred to as habitat. The present invention also relates to a method of controlling the operation of a hot work enclosure.

When undertaking hot work (for example grinding, welding and the like) in an environment where flammable gases may be present, for example in an oil or gas production or exploration environment (zone 1 & 2 hazardous areas) it has become established practice to utilise an enclosure/habitat for undertaking such hot work. A hot work enclosure comprises an enclosed structure which is built around the item of work on which hot work is to be undertaken and a positive air pressure is then applied inside the enclosure so as to prevent the ingress of flammable gases and to provide a safe environment for undertaking hot work. Welding habitats have been known for many years in subsea applications, for example on the underside of ships and other offshore structures such as drilling rigs, however the present invention is directed for use with habitats/enclosures which are used "topside" i.e. on oil rigs or ships where there may be flammable gases in the working environment. Early examples of welding enclosures/habitats are disclosed variously in US5101604 & US5018321 in the name of Wardlaw and GB2382593 in the name of EM&I Limited. Early versions of welding enclosures comprised a more or less solid structure built from wood panels and sheet metal however such structures were difficult and time consuming to erect and dismantle and the applicant was one of the pioneers who developed flexible welding/hot work enclosures, of a modular form, which were readily erected and dismantled. Welding enclosures of this type are known generically as "habitats" in, inter alia, the United Kingdom, in Norway and elsewhere around the world.

US Patent Numbers US6783054 in the name of Pregeant and WO 2004/027724 of STS Stillasservice describe variously control systems for use in the operation of welding enclosures/habitats and such control systems generally comprise a plurality of inter alia gas detectors which may be placed in and around the habitat, which gas detectors are connected to a control unit which is formed and arranged to cut the power to the apparatus (e.g. welding kit and grinding kit) which is performing hot work in the event of the gas detectors detecting flammable gas in or in the vicinity of the enclosure (or another alarm condition occurring). Furthermore such known control systems are also formed and arranged to cut the power to the blower which supplies fresh air and "overpressure" into the enclosure thereby shutting down the whole hot work operation and the integrity of the enclosure.

It became apparent to operators of such systems that if the blower of fresh air into the enclosure was shut off in response to receiving a shutdown signal when, for example, an inflammable gas was detected, the hot work that had been undertaken within the enclosure could still provide an ignition source for a flammable gas after the positive pressure inside the enclosure had returned to equilibrium with the surrounding ambient air pressure. US Patent No. US7091848 in the name of Albarado recognised the issues with such control systems and describes a control system which has a bypass or override function such that in the event of an alarm condition occurring in or around the enclosure the air supply blower continues to provide an overpressure into the enclosure so that any hot work cools sufficiently so as not to be an ignition source for any inflammable gas. By introducing such a bypass or arrangement there is a risk that there may be a malfunction which could result in the air supply blower being switched off. As the safety of workers in offshore environments is of paramount importance it is essential that any such override/bypass mechanisms do not malfunction.

It is an object of the present invention to avoid some of the problems associated with existing enclosure control systems.

The present invention provides an enclosure control system for use with a hot work enclosure comprising: -
at least one air supply gas detector configured to provide an air supply gas detection signal in response to detection of the presence of gas in air to be provided to an enclosure by an air supply system;
an air supply shutdown controller configured to be responsive to the air supply gas detection signal to stop supply of air to the enclosure by the air supply system; and
an enclosure shutdown controller for controlling the shutdown of operation of an enclosure and its associated apparatus for performing hot work in use of the control system, wherein the enclosure shutdown controller is arranged to operate independently of the provision of the air supply gas detection signal.

Thus with the enclosure control system according to the present invention the air supply to the enclosure will continue to operate regardless of any alarm or shut down situation within the enclosure in use of the control system thereby ensuring a positive pressure in the enclosure in the event of an alarm shut down situation.

For the avoidance of doubt, it is established practice for the inlet to the air supply system supplying air into the enclosure to be positioned and located in an area where there is little or no possibility of flammable gas being drawn into the air supply. In the event that the air supply shutdown controller responding to an air supply gas detection signal does stop the supply of air to the enclosure then the air pressure within the enclosure will fall and thus the air pressure detectors within the enclosure will result in the enclosure shutdown controller shutting down the operation of the enclosure and the associated hot work being undertaken inside. Accordingly the air supply to the enclosure can be maintained completely independently of the enclosure shutdown controller and the enclosure shutdown controller is configured to be non-responsive to the air supply gas detection signal.

The air supply gas detector, the air supply shutdown controller and the enclosure shutdown controller are formed and arranged so that the air supply gas detection signal is not provided to the enclosure shutdown controller. Furthermore the air supply gas detector is not connected to the enclosure shutdown controller such that no control or data signals pass between the air supply gas detector and the enclosure shutdown controller.

Preferably the system further comprises at least one enclosure detector device in or in the vicinity of the enclosure wherein the enclosure shutdown controller is configured to shut down operation of the enclosure and associated apparatus for undertaking hot work in response to a detection signal from said at least one enclosure detector device.

Various types of enclosure detector devices may be employed including gas detectors, pressure detectors, pressure differential detectors, heat sensors and the like.

Preferably the at least one enclosure detector device is a pressure detector device formed and arranged and configured with the enclosure shutdown controller such that a pressure drop below a predetermined parameter caused by the stopping of the supply of air to the enclosure causes the enclosure shutdown controller to shutdown operation of the enclosure and associated apparatus for undertaking hot work. The air supply shutdown controller is formed and arranged and configured to operate independently of the enclosure detection signal provided by said at least one enclosure detector device.

Preferably the air supply shutdown controller is formed and arranged and configured to be non-responsive to the or an enclosure detection signal provided by the at least one enclosure detector device.

Preferably the enclosure detector device and the air supply shutdown controller are arranged so that the enclosure detection signal is not provided to the air supply shutdown controller. Furthermore the enclosure detector device is not electrically connected to the air supply shutdown controller. Preferably the air supply shutdown controller is powered by a power source which is independent from the power source powering the enclosure shutdown controller.

Preferably the system further comprises an enclosure power and control unit for supplying power to the apparatus for performing hot work and/or controlling operation of the apparatus for use within the enclosure for undertaking hot work, wherein the enclosure shutdown controller is included in the enclosure power and control unit.

Preferably the enclosure power and control unit is a mobile unit formed and arranged for remote communication including wireless communication with various detector devices in use of the enclosure control system.

In another respect the present invention provides an enclosure system comprising: -
an enclosure structure;
at least one detector device for use within or in the vicinity of the enclosure;
an air supply system for providing air to the enclosure so as to provide an overpressure of air within the enclosure; and
an enclosure control system comprising: -
at least one air supply gas detector configured to provide an air supply gas detection signal in response to detection of the presence of gas in air to be provided to the enclosure by the air supply system;
an air supply shutdown controller responsive to the air supply gas detection signal to stop the supply of air to the enclosure; and
an enclosure shutdown controller for shutting down operation of apparatus within the enclosure for performing hot work, said enclosure shutdown controller being configured to operate independently of the air supply gas detection signal provided by the air supply gas detector.

Preferably the enclosure is a flexible structure comprised in a modular form. The enclosure may comprise fabric panels connected and fastened together to form walls, ceiling and floor, connected together by a fastening arrangement. The fastening arrangement is formed and arranged to be reversibly fastenable and unfastenable. The fastening arrangement may comprise at least one of a zip arrangement and hook and loop type fastener.

In another respect the present invention provides a method of controlling operation of an enclosure comprising: -
providing an enclosure shutdown controller for controlling the shutdown of operation of apparatus within a said enclosure for performing hot work;
monitoring for the presence of flammable gas in air to be provided to the enclosure;
providing an air supply gas detection signal in response to the presence of gas in the air supply;
stopping the supply of air to the enclosure in response to the air supply gas detection signal; and
operating the enclosure shutdown controller independently of the provision of the air supply gas detection signal.

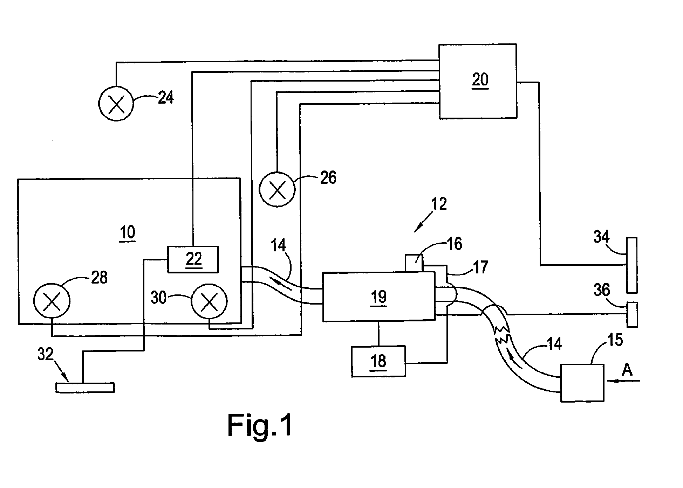

Further preferred features and advantages of the present invention will appear from the following detailed description given by way of example of a preferred embodiment illustrated by the reference to the accompanying drawings in which: -
Figure 1 is a schematic layout of the control system according to the invention.

As shown in Figure 1 there is provided an enclosure (habitat), generally indicated by reference number 10, in which apparatus 22 for undertaking hot work (such as welding, grinding or the like) is provided. The enclosure 10 is a modular construction assembled from flexible panels which are secured together and provide an enclosed space for the hot work to be undertaken.

Air 'A' is supplied by an air supply system 12 to the enclosure so as to provide an overpressure of air in the enclosure and thereby prevent the ingress of inflammable gases which could be ignited by the hot work being undertaken. The air `A' is supplied into the enclosure through a conduit 14 and the inlet 15 for the air supply is located in an area well away from where the enclosure is located and where a "fresh" supply of air 'A', free of any flammable gases, can be drawn from. The air supply system 12 is provided with a gas detector 16 configured to provide an air supply gas detection signal 17 in response to the detection of the presence of gas in air to be provided to the enclosure by the air supply system 12. The air supply system 12 is supplied with an air supply shutdown controller 18 configured to be responsive to the air supply gas detection signal to stop a fan 19 that supplies air to the enclosure by the air supply system.

The enclosure system is provided with an enclosure shutdown controller 20 for controlling the shutdown of apparatus and equipment 22 inside the enclosure for performing hot work. The enclosure shutdown controller 20 is formed and arranged to operate completely independently of the provision of the air supply gas detection signal.

The enclosure shutdown controller 20 has a plurality of sensors 24, 26, 28, 30 (some fixed, some portable) to monitor parameters in and around the vicinity of the enclosure 10 such as presence of gas, temperature changes, differential pressure and the like. In the event of any of these sensors being activated by a reading which is outwith preset parameters the enclosure shutdown controller 20 shuts down the operation of the enclosure and the apparatus 22 for performing hot work.

The enclosure shutdown controller 20 is a portable device formed and arranged to operate completely independently of the air supply system 12 and thus, in the event of the enclosure shutdown controller 20 shutting down the operation of the enclosure 10 and the apparatus 22 performing hot work, the air supply system 12 will continue to supply air `A' to the enclosure thereby maintaining an overpressure in the enclosure and thereby preventing the ingress of inflammable gas and thus allowing any ignition source created by the performance of hot work to cool.

A further particular advantage of the use of the enclosure control system according to the invention is that in use with flexible enclosure/habitat structures of the types supplied by the applicant, the enclosure remains inflated and by maintaining the enclosure in an inflated condition at all times with the air supply system supplying air into the enclosure provides structural integrity to the enclosure structure.

In the event that the air supply system 12 receives a signal 17 from the air supply gas detector 16 which has detected gas entering the air supply, the air supply system is shut down, by the air supply shutdown controller, the effect of which is that the overpressure within the enclosure is maintained for at least a short period to time. In use with the flexible enclosure structure as supplied by the applicant the overpressure within the enclosure will gradually fall away until the pressure inside the enclosure corresponds to the ambient air pressure. As the pressure drops the enclosure shutdown controller 20 will detect pressure through its detector the drop of pressure and thus shut down the operation of the enclosure 10 and the supply of power 32 to apparatus 22 for performing hot work.

With this arrangement a continuous supply of air to the enclosure can be more or less guaranteed and the air supply is not controlled in any way by the enclosure shutdown controller 20. If gas is detected only on a remote gas sensor 24 situated outwith the enclosure the air supply 12 maintains the supply of air into the enclosure. It is only if gas is detected in the air supply to the enclosure that the air supply is shut down which has the consequence of causing the enclosure shutdown controller to shut down operations within the enclosure due to the pressure inside the enclosure dropping. As with existing enclosure arrangements there is provided audio visual alarm systems.

In the event of the power supply 34 to the enclosure shutdown controller failing for any reason, the air supply system which is powered by a separate power source 36 can be maintained.

Various modifications may be made to the abovedescribed embodiment without departing from the scope of the present invention which is defined by the appended claims. Thus, for example, the power supply to the air supply system may be taken from the same source as the power supply to the enclosure shutdown controller. Typically this will be the power supply to the structure in use of the enclosure system, for example an oil rig and the electricity supply.

## Claims

1. An enclosure control system for use with a hot work enclosure (10) comprising: -
at least one air supply gas detector (16) configured to provide an air supply gas detection signal (17) in response to detection of the presence of gas in air (A) to be provided to an enclosure by an air supply system (12);
an air supply shutdown controller (20) configured to be responsive to the air supply gas detection signal to stop supply of air to the enclosure by the air supply system; and
an enclosure shutdown controller (20) for controlling the shutdown of operation of an enclosure and its associated apparatus (22) for performing hot work in use of the control system, wherein the enclosure shutdown controller (20) is arranged to operate independently of the provision of the air supply gas detection signal (17).

2. An enclosure control system as claimed in Claim 1 wherein the air supply gas detector, the air supply shutdown controller and the enclosure shutdown controller are formed and arranged so that the air supply gas detection signal is not provided to the enclosure shutdown controller.

3. An enclosure control system as claimed in Claim 1 or 2 wherein the air supply gas detector is not connected to the enclosure shutdown controller such that no control or data signals pass between the air supply gas detector and the enclosure shutdown controller.

4. An enclosure control system as claimed in any one of Claims 1 to 3 which further comprises at least one enclosure detector device selected from the group including gas detectors, pressure detectors, pressure differential detectors, heat sensors, in or in the vicinity of the enclosure wherein the enclosure shutdown controller is configured to shut down operation of the enclosure and associated apparatus for undertaking hot work in response to a detection signal from said at least one enclosure detector device.

5. An enclosure control system as claimed in any one of Claims 1 to 4 wherein the at least one enclosure detector device is a pressure detector device formed and arranged and configured with the enclosure shutdown controller such that a pressure drop below a predetermined parameter caused by the stopping of the supply of air to the enclosure causes the enclosure shutdown controller to shutdown operation of the enclosure and associated apparatus for undertaking hot work.

6. An enclosure control system as claimed in any one of Claims 1 to 5 wherein the air supply shutdown controller is formed and arranged and configured to operate independently of the enclosure detection signal provided by said at least one enclosure detector device.

7. An enclosure control system as claimed in any one of Claims 1 to 6 wherein the air supply shutdown controller is formed and arranged and configured to be non-responsive to the or an enclosure detection signal provided by the at least one enclosure detector device.

8. An enclosure control system as claimed in any one of Claims 1 to 7 wherein the air supply shutdown controller is powered by a power source which is independent from the power source powering the enclosure shutdown controller.

9. An enclosure control system as claimed in any one of Claims 1 to 8 which comprises an enclosure power and control unit for supplying power to the apparatus for performing hot work and/or controlling operation of the apparatus for use within the enclosure for undertaking hot work, wherein the enclosure shutdown controller is included in the enclosure power and control unit.

10. An enclosure control system as claimed in Claim 9 wherein the enclosure power and control unit is a mobile unit formed and arranged for remote communication including wireless communication with various detector devices in use of the enclosure control system.

11. An enclosure system comprising: -
an enclosure structure;
at least one detector device for use within or in the vicinity of the enclosure;
an air supply system for providing air to the enclosure so as to provide an overpressure of air within the enclosure; and
an enclosure control system comprising: -
at least one air supply gas detector configured to provide an air supply gas detection signal in response to detection of the presence of gas in air to be provided to the enclosure by the air supply system;
an air supply shutdown controller responsive to the air supply gas detection signal to stop the supply of air to the enclosure; and
an enclosure shutdown controller for shutting down operation of apparatus within the enclosure for performing hot work, said enclosure shutdown controller being configured to operate independently of the air supply gas detection signal provided by the air supply gas detector.

12. An enclosure system as claimed in Claim 11 wherein the enclosure is a flexible structure comprised in a modular form with fabric panels connected and fastened together to form walls, ceiling and floor, connected together by a reversibly fastenable and unfastenable fastening arrangement.

13. A method of controlling operation of an enclosure (10) comprising: -
providing an enclosure shutdown controller (20) for controlling the shutdown of operation of apparatus (22) within a said enclosure for performing hot work;
monitoring for the presence of flammable gas in air to be provided to the enclosure (10);
providing an air supply gas detection signal in response to the presence of gas in the air supply;
stopping the supply of air to the enclosure (10) in response to the air supply gas detection signal; and
operating the enclosure shutdown controller (20) independently of the provision of the air supply gas detection signal.

## Patentansprüche

1. Einhausungssteuerungssystem zur Verwendung mit einer Warmverarbeitungseinhausung (10), umfassend:
mindestens einen Luftzufuhr-Gasdetektor (16), der dafür konfiguriert ist, als Antwort auf die Ermittlung des Vorhandenseins von Gas in Luft (A), die einer Einhausung durch ein Luftzufuhrsystem (12) bereitgestellt werden soll, ein Luftzufuhr-Gasermittlungssignal (17) bereitzustellen;
eine Luftzufuhr-Abschaltsteuerungseinrichtung (20), die dafür konfiguriert ist, auf das Luftzufuhr-Gasermittlungssignal anzusprechen, um die Zufuhr von Luft zu der Einhausung durch das Luftzufuhrsystem zu beenden; und
eine Einhausung-Abschaltsteuerungseinrichtung (20) zum Steuern des Herunterfahrens des Betriebs einer Einhausung und ihrer zugehörigen Apparaturen (22) zum Durchführen von Warmverarbeitung bei Verwendung des Steuerungssystems, worin die Einhausung-Abschaltsteuerungseinrichtung (20) dafür eingerichtet ist, unabhängig von der Bereitstellung des Luftzufuhr-Gasermittlungssignals (17) zu arbeiten.

2. Einhausungssteuerungssystem nach Anspruch 1, worin der Luftzufuhr-Gasdetektor, die Luftzufuhr-Abschaltsteuerungseinrichtung und die Einhausung-Abschaltsteuerungseinrichtung so ausgebildet und angeordnet sind, dass das Luftzufuhr-Gasermittlungssignal nicht an die Einhausung-Abschaltsteuerungseinrichtung übergeben wird.

3. Einhausungssteuerungssystem nach Anspruch 1 oder 2, worin der Luftzufuhr-Gasdetektor nicht mit der Einhausung-Abschaltsteuerungseinrichtung verbunden ist, so dass zwischen dem Luftzufuhr-Gasdetektor und der Einhausung-Abschaltsteuerungseinrichtung keine Steuerungs- oder Datensignale übermittelt werden.

4. Einhausungssteuerungssystem nach einem der Ansprüche 1 bis 3, das ferner mindestens eine Einhausungsdetektorvorrichtung umfasst, die aus der Gruppe ausgewählt wird, die Folgendes einschließt: Gasdetektoren, Druckdetektoren, Druckunterschiedsdetektoren, Wärmesensoren, und zwar in oder in der Nähe der Einhausung, worin die Einhausung-Abschaltsteuerungseinrichtung dafür konfiguriert ist, als Antwort auf ein Ermittlungssignal von der mindestens einen Einhausungsdetektorvorrichtung den Betrieb der Einhausung und zugehöriger Apparaturen zum Vornehmen von Warmverarbeitung herunterzufahren.

5. Einhausungssteuerungssystem nach einem der Ansprüche 1 bis 4, worin die mindestens eine Einhausungsdetektorvorrichtung eine Druckdetektorvorrichtung ist, die mit der Einhausung-Abschaltsteuerungseinrichtung ausgebildet und angeordnet und konfiguriert ist, so dass ein durch das Beenden der Zufuhr von Luft zu der Einhausung bewirkter Druckabfall unter einen vorbestimmten Parameter bewirkt, dass die Einhausung-Abschaltsteuerungseinrichtung den Betrieb der Einhausung und zugehöriger Apparaturen zum Vornehmen von Warmverarbeitung herunterfährt.

6. Einhausungssteuerungssystem nach einem der Ansprüche 1 bis 5, worin die Luftzufuhr-Abschaltsteuerungseinrichtung ausgebildet und angeordnet und konfiguriert ist, um unabhängig von dem Einhausungsermittlungssignal zu arbeiten, das durch die mindestens eine Einhausungsdetektorvorrichtung bereitgestellt wird.

7. Einhausungssteuerungssystem nach einem der Ansprüche 1 bis 6, worin die Luftzufuhr-Abschaltsteuerungseinrichtung ausgebildet und angeordnet und konfiguriert ist, um nicht auf das oder ein Einhausungsermittlungssignal anzusprechen, das durch die mindestens eine Einhausungsdetektorvorrichtung bereitgestellt wird.

8. Einhausungssteuerungssystem nach einem der Ansprüche 1 bis 7, worin die Luftzufuhr-Abschaltsteuerungseinrichtung durch eine Stromquelle versorgt wird, die von der Stromquelle, welche die Einhausung-Abschaltsteuerungseinrichtung versorgt, unabhängig ist.

9. Einhausungssteuerungssystem nach einem der Ansprüche 1 bis 8, das eine Einhausung-Stromversorgungs- und -Steuerungseinheit zum Zuführen von Strom zu den Apparaturen zum Durchführen von Warmverarbeitung und/oder Steuern des Betriebs der Apparaturen zur Verwendung innerhalb der Einhausung zum Vornehmen von Warmverarbeitung umfasst, worin die Einhausung-Abschaltsteuerungseinrichtung in die Einhausung-Stromversorgungs- und -Steuerungseinheit einbezogen ist.

10. Einhausungssteuerungssystem nach Anspruch 9, worin die Einhausung-Stromversorgungs- und -Steuerungseinheit eine mobile Einheit ist, die zur Fernkommunikation einschließlich drahtloser Kommunikation mit verschiedenen Detektorvorrichtungen bei der Verwendung des Einhausungssteuerungssystems ausgebildet und angeordnet ist.

11. Einhausungssystem, umfassend:
eine Einhausungsstruktur;
mindestens eine Detektorvorrichtung zur Verwendung in oder in der Nähe der Einhausung;
ein Luftzufuhrsystem zum Bereitstellen von Luft für die Einhausung, um dadurch einen Überdruck von Luft innerhalb der Einhausung bereitzustellen; und
ein Einhausungssteuerungssystem, umfassend:
mindestens einen Luftzufuhr-Gasdetektor, der dafür konfiguriert ist, als Antwort auf die Ermittlung des Vorhandenseins von Gas in der Luft, die der Einhausung durch das Luftzufuhrsystem bereitgestellt werden soll, ein Luftzufuhr-Gasermittlungssignal bereitzustellen;
eine Luftzufuhr-Abschaltsteuerungseinrichtung, die auf das Luftzufuhr-Gasermittlungssignal anspricht, um die Zufuhr von Luft zu der Einhausung zu beenden; und
eine Einhausung-Abschaltsteuerungseinrichtung zum Herunterfahren des Betriebs von Apparaturen innerhalb der Einhausung zum Durchführen von Warmverarbeitung, wobei die Einhausung-Abschaltsteuerungseinrichtung dafür eingerichtet ist, unabhängig von dem Luftzufuhr-Gasermittlungssignal, das durch den Luftzufuhr-Gasdetektor bereitgestellt wird, zu arbeiten.

12. Einhausungssystem nach Anspruch 11, worin die Einhausung eine flexible Struktur ist, die in modularer Form mit Gewebepaneelen besteht, die miteinander verbunden und verriegelt sind, um Wände, Decke und Boden zu bilden, und durch eine umkehrbar verriegelbare und entriegelbare Verriegelungsanordnung miteinander verbunden sind.

13. Verfahren zum Steuern des Betriebs einer Einhausung (10), umfassend:
Bereitstellen einer Einhausung-Abschaltsteuerungseinrichtung (20) zum Steuern des Herunterfahrens des Betriebs von Apparaturen (22) innerhalb der Einhausung zum Durchführen von Warmverarbeitung;
Überwachen auf das Vorhandensein von entflammbarem Gas in Luft, die der Einhausung (10) bereitgestellt werden soll;
Bereitstellen eines Luftzufuhr-Gasermittlungssignals als Antwort auf das Vorhandensein von Gas in der Luftzufuhr;
Beenden der Zufuhr von Luft zu der Einhausung (10) als Antwort auf das Luftzufuhr-Gasermittlungssignal; und
Betreiben der Einhausung-Abschaltsteuerungseinrichtung (20) unabhängig von der Bereitstellung des Luftzufuhr-Gasermittlungssignals.

## Revendications

1. Système de contrôle d'enceinte destiné à être utilisé avec une enceinte de travail à haute température (10) comprenant :
au moins un détecteur de gaz d'alimentation en air (16) configuré pour fournir un signal de détection de gaz d'alimentation en air (17) en réponse à la détection de la présence de gaz dans l'air (A) devant être fourni à une enceinte par un système d'alimentation en air (12) ;
un contrôleur d'arrêt d'alimentation en air (20) configuré pour couper, en réponse au signal de détection de gaz d'alimentation en air, l'alimentation en air vers l'enceinte par le système d'alimentation en air ; et
un contrôleur d'arrêt d'enceinte (20) pour contrôler l'arrêt de fonctionnement d'une enceinte et de son appareil associé (22) pour effectuer un travail à haute température en cours d'utilisation du système de contrôle, le contrôleur d'arrêt d'enceinte (20) étant conçu pour fonctionner indépendamment de la fourniture du signal de détection de gaz d'alimentation en air (17).

2. Système de contrôle d'enceinte selon la revendication 1, dans lequel le détecteur de gaz d'alimentation en air, le contrôleur d'arrêt d'alimentation en air et le contrôleur d'arrêt d'enceinte sont formés et conçus de sorte que le signal de détection de gaz d'alimentation en air n'est pas fourni au contrôleur d'arrêt d'enceinte.

3. Système de contrôle d'enceinte selon la revendication 1 ou 2, dans lequel le détecteur de gaz d'alimentation en air n'est pas connecté au contrôleur d'arrêt d'enceinte de telle sorte qu'aucun signal de contrôle ou de données ne passe entre le détecteur de gaz d'alimentation en air et le contrôleur d'arrêt d'enceinte.

4. Système de contrôle d'enceinte selon l'une quelconque des revendications 1 à 3, comprenant en outre au moins un dispositif détecteur d'enceinte choisi dans le groupe comprenant les détecteurs de gaz, les détecteurs de pression, les détecteurs de différentiel de pression, les détecteurs de chaleur, dans l'enceinte ou à proximité de celle-ci, le contrôleur d'arrêt d'enceinte étant configuré pour arrêter le fonctionnement de l'enceinte et de l'appareil associé pour entreprendre un travail à haute température en réponse à un signal de détection en provenance dudit au moins un dispositif détecteur d'enceinte.

5. Système de contrôle d'enceinte selon l'une quelconque des revendications 1 à 4, dans lequel au moins un dispositif détecteur d'enceinte est un dispositif détecteur de pression formé, conçu et configuré avec le contrôleur d'arrêt d'enceinte de telle sorte qu'une chute de pression en deçà d'un paramètre prédéterminé causée par l'interruption de l'alimentation en air vers l'enceinte entraîne l'arrêt par le contrôleur d'arrêt d'enceinte du fonctionnement de l'enceinte et de l'appareil associé pour entreprendre un travail à haute température.

6. Système de contrôle d'enceinte selon l'une quelconque des revendications 1 à 5, dans lequel le contrôleur d'arrêt d'alimentation en air est formé, conçu et configuré pour fonctionner indépendamment du signal de détection d'enceinte fourni par ledit au moins un dispositif détecteur d'enceinte.

7. Système de contrôle d'enceinte selon l'une quelconque des revendications 1 à 6, dans lequel le contrôleur d'arrêt d'alimentation en air est formé, conçu et configuré pour être non réceptif au ou à un signal de détection d'enceinte fourni par l'au moins un dispositif détecteur d'enceinte.

8. Système de contrôle d'enceinte selon l'une quelconque des revendications 1 à 7, dans lequel le contrôleur d'arrêt d'alimentation en air est alimenté par une source d'alimentation qui est indépendante de la source d'alimentation alimentant le contrôleur d'arrêt d'enceinte.

9. Système de contrôle d'enceinte selon l'une quelconque des revendications 1 à 8, qui comprend une unité d'alimentation et de contrôle d'enceinte pour fournir de l'énergie à l'appareil pour effectuer un travail à haute température et/ou contrôler le fonctionnement de l'appareil destiné à être utilisé à l'intérieur de l'enceinte pour entreprendre un travail à haute température, dans lequel le contrôleur d'arrêt d'enceinte est inclus dans l'unité d'alimentation et de contrôle d'enceinte.

10. Système de contrôle d'enceinte selon la revendication 9, dans lequel l'unité d'alimentation et de contrôle d'enceinte est une unité mobile formée et conçue pour une communication à distance, y compris une communication sans fil, avec divers dispositifs détecteurs en cours d'utilisation du système de contrôle d'enceinte.

11. Système d'enceinte comprenant :
une structure d' enceinte ;
au moins un dispositif détecteur destiné à être utilisé à l'intérieur ou à proximité de l'enceinte ;
un système d'alimentation en air pour fournir de l'air à l'enceinte de sorte à fournir une surpression d'air à l'intérieur de l'enceinte ; et
un système de contrôle d'enceinte comprenant :
au moins un détecteur de gaz d'alimentation en air configuré pour fournir un signal de détection de gaz d'alimentation en air en réponse à la détection de la présence de gaz dans l'air devant être fourni à l'enceinte par le système d'alimentation en air;
un contrôleur d'arrêt d'alimentation en air réceptif au signal de détection de gaz d'alimentation en air pour arrêter l'alimentation en air de l'enceinte ; et
un contrôleur d'arrêt d'enceinte pour arrêter le fonctionnement de l'appareil à l'intérieur de l'enceinte pour effectuer un travail à haute température, ledit contrôleur d'arrêt d'enceinte étant configuré pour fonctionner indépendamment du signal de détection de gaz d'alimentation en air fourni par le détecteur de gaz d'alimentation en air.

12. Système d'enceinte selon la revendication 11, dans lequel l'enceinte est une structure flexible constituée selon une forme modulaire avec des panneaux de tissu reliés et fixés ensemble pour former des parois, un plafond et un plancher, reliés ensemble par un mécanisme de fixation attachable et détachable de façon réversible.

13. Procédé de contrôle du fonctionnement d'une enceinte (10) comprenant :
la fourniture d'un contrôleur d'arrêt d'enceinte (20) pour contrôler l'arrêt du fonctionnement de l'appareil (22) à l'intérieur d'une dite enceinte pour effectuer un travail à haute température ;
le contrôle de la présence de gaz inflammable dans l'air devant être fourni à l'enceinte (10) ;
la fourniture d'un signal de détection de gaz d'alimentation en air en réponse à la présence de gaz dans l'alimentation en air ;
l'arrêt de l'alimentation en air d'enceinte (10) en réponse au signal de détection de gaz d'alimentation en air ; et
le fonctionnement du contrôleur d'arrêt d'enceinte (20) indépendamment de la fourniture du signal de détection de gaz d'alimentation en air.
